# EUROPEAN PATENT SPECIFICATION

(11) **EP 1 840 101 B1**
(45) Date of publication and mention of the grant of the patent: **09.01.2013**
(21) Application number: 07006316.9
(22) Date of filing: 27.03.2007
(51) Int. Cl.: C04B 35/14, C04B 35/66

(54) **Fused siliceous refractory and production method thereof**
Geschmolzenes kieselhaltiges feuerfestes Material und Verfahren zu seiner Herstellung
Réfractaire en silicone fondu et son procédé de production

(30) Priority: 31.03.2006 JP 2006100492
(43) Date of publication of application: 03.10.2007
(73) Proprietor: NICHIAS CORPORATION, Tokyo 105-8555 (JP)
(72) Inventor: Sakamoto, Akifumi, Hamamatsu-shi Shizuoka (JP)
(74) Representative: Grünecker, Kinkeldey, Stockmair & Schwanhäusser

(56) References cited:
- EP-A1- 0 899 234
- EP-A1- 1 839 773
- WO-A-00/75089
- GB-A- 2 159 144
- US-A- 4 998 710
- US-B2- 6 864 199

## Description

### FIELD OF THE INVENTION

The present invention relates to production method of a fused siliceous refractory, and more particularly to production method of a fused siliceous refractory suitable as a heat-resistant material used in a casting machine for casting a relatively low-melting metal generally having a melting point of 800 °C or less, such as aluminum, magnesium, zinc, tin, lead or an alloy thereof, at a site in contact with a molten metal of the low-melting metal.

### BACKGROUND OF THE INVENTION

The fused siliceous refractory is a refractory obtained by sintering fused silica, and is low in the coefficient of thermal expansion and excellent in thermal shock resistance. Accordingly, in the machine for casting, for example, aluminum, magnesium, zinc, tin, lead or an alloy thereof, it has been used at a site in which a molten metal is transferred, supplied and retained. Specifically, it has been used, for example, as materials constituting lining materials for a teeming box, a trough and a retaining furnace, or constituting attached members such as a float, a spout and a hot-top ring.

As a production method of such a fused siliceous refractory, there has been known, for example, a production method of preparing a slip material or a kneaded material from a coarse-grained fused silica powder and an ultrafine fused silica powder, and burning it at a specified temperature after molding and drying (patent document 1). According to this method, a fused siliceous refractory containing only fused silica as a component is obtained. Further, there has also been known a production method of molding a mixture for molding that contains a fused silica powder and a compound containing boron or phosphorus, and burning it under specific conditions (patent document 2). According to this method, a fused siliceous refractory in which a phase of borosilicate glass or phosphosilicate glass is formed in fused silica is obtained by using boric acid or phosphoric acid as the above-mentioned compound.

Patent Document 1: JP-B-52-43849 (page 2, column 4)
Patent Document 2: JP-A-11-60330 (page 2, column 1, page 4, column 5 and page 4, column 6)

On the other hand, also in mobile equipment such as digital cameras, digital video cameras, mobile phones and notebook personal computers, or heavy loads such as automobiles, frames and case bodies tend to be formed by magnesium alloys for weight saving. However, magnesium or a magnesium-containing alloy is very high in activity, so that conventional fused siliceous refractories have the problem that only several uses, or only one use in some cases, force them to be exchanged.

US 6 864 199 B2 discloses a dry refractory composition and its preparation method. The dry refractory composition comprises a matrix material having a particle size less than 100 mesh (149 µm), a dense refractory aggregate having a particle size greater than 100 mesh (149 µm) and metal fibers.

GB 2 159 144 A discloses a method to obtain a composition comprising a mixture of several silicates, oxides or carbides in which silicium dioxide (SiO₂) is mentioned.

WO 00/75089 A discloses a light-weight dry refractory composition having superior insulating values and excellent resistance to molten metals and alloys. Said refractory composition comprises five ingredients namely, filler light weight material, matrix material, heat activated bonding agent, bend refractory aggregate and dust suppressant.

### SUMMARY OF THE INVENTION

It is therefore an object of the invention to provide a production method of a fused siliceous refractory having excellent corrosion resistance against a highly reactive molten metal.
Other objects and effects of the invention will become apparent from the following description.

Under such an actual situation, the present inventors have made extensive studies. As a result, it has been found out that a fused siliceous refractory having high corrosion resistance is obtained by incorporating a fluoride to fused silica, thus completing the invention. That is, the invention provides the following production method of a fused siliceous refractory:
(1) A production method of a fused siliceous refractory comprising:
   a slurry preparation step of preparing a slurry comprising raw material solid matter containing a fused silica powder and a fluoride powder,
   wherein the raw material solid matter contains the fluoride in an amount of 0.01 to 10% by weight in terms of fluorine content and 90 to 99.9% by weight of the fused silica powder,
   wherein the fused silica powder comprises a mixture of 50 to 95% by weight of a first fused silica powder having an average particle size of 1 to 10 µm and 10 to 50% by weight of a second fused silica powder having an average particle size of 50 to 500 µm;
   a moulding step of obtaining a molded article from the slurry; and
   a burning step of burning the molded article at 1050 to 1250° C.
(2) The production method of a fused siliceous refractory according to (1), wherein the fluoride powder comprises at least one fluoride selected from the group consisting of calcium fluoride (CaF₂), magnesium fluoride (MgF₂) and cryolite (Na₃AlF₆) and has an average particle size of 1 to 10 µm.
(3) The production method of a fused siliceous refractory according to any one of (1) and (2), wherein the slurry comprises 100 parts by weight of the raw material solid matter and 10 to 40 parts by weight of water.
The "magneaium-containing alloy" as referred to in the invention means generally an alloy of magnesium and a low-melting metal other than magnesium, such as aluminum, zinc, tin or lead. Although the content of magnesium may be any, magnesium is contained realistically within the range of 0.1% by weight to 99.9% by weight based on the total amount of the alloy.

The fused siliceous refractory according to the invention contains a fluoride, so that corrosion resistance against a molten metal having high corrosion properties such as magnesium or a magnesium-containing alloy, which is very excellent compared to that of conventional materials, is imparted thereto. Further, according to the production method of a fused siliceous refractory of the invention, such a fused siliceous refractory excellent in corrosion resistance can be obtained easily and efficiently.

### BRIEF DESCRIPTION OF THE DRAWINGS

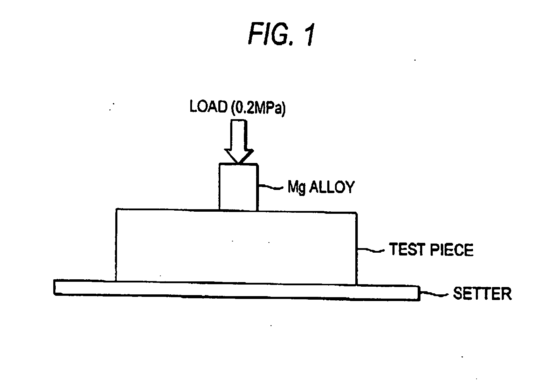

Fig. 1 is a schematic view for illustrating the test method of the corrosion test in Examples.

### DETAILED DESCRIPTION OF THE INVENTION

The invention will be described in detail below.
The fused siliceous refractory of the invention is a molded product containing fused silica and a fluoride. In order to produce such a fused siliceous refractory, a slurry containing raw material solid matter comprising a fused silica powder and a fluoride powder is first prepared.

The fused silica powder is usually a mixture having an average particle size of 1 to 500 µm, and may be used as raw material solid matter as it is. However, it is preferred to use a mixture of a relatively fine-grained first fused silica powder and a relatively coarse-grained second fused silica powder. Thereby, the first fused silica powder enters clearances formed among particles of the second fused silica powder, and when the fused silica powder is formed into a molded article, filling properties thereof become high, which causes a texture of the fused siliceous refractory after burning to be densified, thereby increasing heat resistance. This is therefore preferred. Further, when the fused siliceous refractory is used as a lining material or the like, such improvement in heat resistance makes it possible to decrease its thickness, thereby reducing the mass to improve workability and further to decrease the specific heat (thermal capacity). This is therefore preferred.

When the mixture of the first fused silica powder and the second fused silica powder is used, the average particle size of the first fused silica powder is preferably from 1 to 10 µm, and more preferably from 2 to 6 µm. On the other hand, the average particle size of the second fused silica powder is preferably from 50 to 500 µm, and more preferably from 100 to 300 µm. Further, as for the blending ratio of the first fused silica powder and the second fused silica powder in the fused silica powder, their proportions are preferably such that 10 to 50% by weight of the second fused silica powder and 50 to 90% by weight of the first fused silica powder, and more preferably such that 20 to 40% by weight of the second fused silica powder and 60 to 80% by weight of the first fused silica powder. When the respective average particle sizes of the first fused silica powder and the second fused silica powder and the blending ratio thereof are selected within the above-mentioned ranges, filling properties of the fused silica powder in the molded article are preferably improved.

The fluorides are not particularly limited, but include inorganic fluorides such as calcium fluoride (CaF₂), magnesium fluoride (MgF₂), cryolite (Na₃AlF₆), lithium fluoride (LiF), barium fluoride (BaF₂), aluminum fluoride (AlF₃), strontium fluoride (SrF₂), cerium fluoride (CeF₃), yttrium fluoride (YF₃), sodium fluoride (NaF), potassium fluoride (KF), sodium silicofluoride (Na₂SiF₆) and ammonium silicofluoride ((NH₄)₂SiF₆). In the invention, at least one member selected from calcium fluoride (CaF₂), magnesium fluoride (MgF₂) and cryolite (Na₃AlF₆) is preferably used because of low cost.

The average particle size of the fluoride is preferably from 1 to 10 µm, and more preferably from 2 to 6 µm. When the particle size is selected within the above-mentioned range, the fluoride powder can be easily homogeneously dispersed in the fused silica powder. This is therefore preferred. In particular, when the fused silica powder is the mixture of the first fused silica powder and the second fused silica powder, the fluoride powder becomes easy to enter clearances formed among particles of the second fused silica powder by using the fluoride powder having a particle size similar to that of the first fused silica powder, thereby becoming easy to disperse more homogeneously. This is therefore more preferred.

The blending ratio of the fused silica powder and the fluoride powder in the raw material solid matter is not particularly limited so long as the fluorine content in the resulting fused siliceous refractory falls within the range of preferably 0.01 to 10% by weight, more preferably 0.1 to 3.0% by weight. For example, 0.01 to 10% by weight of the fluoride powder and 90 to 99.99% by weight of the fused silica powder are blended. More preferably, 1 to 5% by weight of the fluoride powder and 95 to 99% by weight of the fused silica powder are blended. When the blending ratio is within the above-mentioned range, the strength, thermal shock resistance (the coefficient of thermal expansion) and corrosion resistance of the fused siliceous refractory is satisfactory, so that this is preferred.

The slurry is prepared by mixing the above-mentioned raw material solid matter with water. As a mixing method, there can be employed a known method. The blending ratio of the raw material solid matter and water in the slurry is adjusted preferably to 10 to 40 parts by weight of water, and more preferably to 20 to 30 parts by weight, based on 100 parts by weight of the raw material solid matter.

Further, a molding aid, a binder or the like may be added to the slurry as needed. The molding aids used in the invention include, for example, PVA (polyvinyl alcohol) and CMC (carboxymethylcellulose). In addition, the binders used in the invention include, for example, silicate glass and caustic soda. The use of the molding aid is preferred because moldability is improved, and the use of the binder is preferred because shape retention of the molded article is improved.

Then, a molding step is performed to obtain the molded article having a desired shape from the above-mentioned slurry. A method for obtaining the molded article is not particularly limited, and there can be used, for example, cast molding, press molding or extrusion molding. Of these, cast molding is preferred, because the slurry can be densely filled in a mold and the resulting molded article easily becomes high in density.

The resulting molded article may be burned subsequently moving to a burning step as it is. However, when a large amount of water remains in the molded article, or when the molded article is rapidly elevated in temperature in the burning step, a drying step may be employed before the burning step is performed, as needed, for fear of rapid evaporation of water in the molded article to generate cracks or the like in a burned article. The drying step may be performed under conditions under which water in the molded article is gradually evaporated, and a known method can be employed.

Then, the burning step is performed to obtain a fused siliceous refractory from the above-mentioned molded article. There is no limitation on the burning temperature, as long as it is a temperature at which fused silica powder particles are sintered together. However, it is suitably from 1050 to 1250°C, and preferably from 1100 to 1200°C. When the burning temperature is less than 1050°C, the fused silica powder particles are unfavorably difficult to be sintered together. On the other hand, when the burning temperature exceeds 1250°C, cristobalite is unfavorably formed to increase the coefficient of thermal expansion of the fused siliceous refractory. There is no limitation on the burning time, as long as burning of the above-mentioned molded article is completed. However, it is suitably from 0.5 to 20 hours, and preferably from 1 to 5 hours. When the burning time is 0.5 hour, sufficient sintered strength is not obtained. This is therefore unfavorable. Even when the burning time exceeds 20 hours, the sintering effect scarcely changes.

The thus-obtained fused siliceous refractory according to the invention comprises an amorphous fused silica phase obtained by fusing and sintering the fused silica powder, and the fluoride nearly homogeneously dispersed in the fused silica phase. When the mixture of the first fused silica powder and the second fused silica powder is used as the fused silica powder, the first fused silica powder and the fluoride enter clearances formed among particles of the second fused silica powder. As the content ratio of the fused silica and the fluoride, the blending ratio in the raw material solid matter is maintained as it is.

The bulk density of the fused siliceous refractory according to the invention is preferably from 1.3 to 2.2 g/cm³, and more preferably from 1.4 to 1.8 g/cm³. When the bulk density is less than 1.3 g/cm³, the strength unfavorably decreases. On the other hand, exceeding 2.2 g/cm³ unfavorably results in an increase in mass.

Further, taking processability and strength into consideration, the bending strength of the fused siliceous refractory according to the invention is preferably 5 MPa or more, and more preferably 6MPa or more.

Furthermore, the fused siliceous refractory according to the invention is joined to a base material composed of another material at an application site. Accordingly, in order to inhibit separation from the base material, the coefficient of thermal expansion thereof is preferably 2.50×10⁻⁶ °C⁻¹ or less, more preferably 2.0×10⁻⁶ °C⁻¹ or less, still more preferably 1.5×10⁻⁶ °C⁻¹ or less, and particularly preferably 1.0×10⁻⁶ °C⁻¹ or less.

Such a bulk density, bending strength and coefficient of thermal expansion is can be attained by adjusting the composition of the raw material solid matter, molding conditions and burning conditions.

The fused siliceous refractory according to the invention, to which excellent corrosion resistance is imparted by the fluoride, is most suitably used particularly at a site in contact with a molten metal of magnesium or a magnesium-containing alloy. Accordingly, the fused siliceous refractory of the invention is suitable as a lining materials for a teeming box, a trough and a retaining furnace of a machine for casting magnesium or a magnesium-containing alloy, or as attached members such as a float, a spout, a hot-top ring and a transition plate.

### EXAMPLES

The present invention will be illustrated in greater detail with reference to the following Examples and comparative Examples, but the invention should not be construed as being limited thereto.

### EXAMPLES 1 TO 13 AND COMPARATIVE EXAMPLE 1

As shown in Tables 1 and 2, fused silica powder A, fused silica powder B and a calcium fluoride powder or a magnesium fluoride were mixed to prepare a raw material solid matter, and further, 20 parts by weight of water was added to 100 parts by weight of this raw material solid matter, followed by kneading to obtain each slurry. Details of the ingredients are as shown below. This slurry was poured into a gypsum mold, and cast molding was performed. The resulting molded articles were burned in a nitrogen gas atmosphere at 1150°C for 3 hours to obtain tabular test specimens 150 mm long, 30 mm wide and 15 mm thick.

| | |
|---|---|
| Fused Silica Powder A | Average particle size: 5 µm |
| Fused Silica Powder B | Average particle size: 200 µm |
| Calcium Fluoride Powder | Reagent (fluorine content: 48% by weight) manufactured by Wako Pure Chemical Industries, Ltd. |
| Magnesium Fluoride Powder | Reagent (fluorine content: 60% by weight) manufactured by Wako Pure Chemical Industries, Ltd. |
| Water | Distilled Water |

The bulk density, three-point bending strength and coefficient of thermal expansion of the respective test specimens were measured, and a corrosion test were made. The results thereof are shown together in Tables 1 and 2.

The coefficient of thermal expansion is a value measured according to JIS-R1618 at 1,000°C.

Further, the tree-point bending strength was measured at a distance between fulcrums of 100 mm and a loading rate of 2 mm/min using an autograph "AG-50kNG" manufactured by Shimadzu Corporation, for a test piece 150 mm long, 20 mm wide and 7 mm thick cut out from the test specimen.

For the corrosion test, a test piece having a rectangular shape with a side of about 70 mm and a thickness of 25 mm was cut out from the test specimen. As schematically shown in Fig. 1, a column 8 mm in diameter and 10 mm high composed of a magnesium alloy (AZ31) was placed on an almost center portion of the test piece arranged on a setter, and a load of 0.2 MPa was applied onto an upper surface of the column. In this state, the temperature was elevated from room temperature to 800°C, taking 2 hours, in an argon atmosphere, thereby melting the magnesium alloy. Thereafter, the test piece was maintained at 800°C for 1 hour in the argon atmosphere in a state where the same load was applied onto a liquid surface of a melt of the magnesium alloy, thereby keeping the state of contact of the melt of the test piece with the magnesium alloy. After a lapse of 1 hour, the pressure was released, and the melt of the magnesium alloy was recovered from a surface of the test piece. After the test piece was cooled to room temperature, the cross section of the test piece was observed, and the area of a portion where corroded by contact with the melt of the magnesium alloy was measured. The area practically not posing a particular problem was rated as "A", the area somewhat posing a problem but practically not posing a problem was rated as "B", and the area practically posing a problem was rated as "C". The results thereof are shown in Tables 1 and 2.

**Table 1**

| | | | Comparative Example 1 | Example 1 | Example 2 | Example 3 | Example 4 | Example 5 | Example 6 | Example 7 | Example 8 |
|---|---|---|---|---|---|---|---|---|---|---|---|
| Formulation (parts by weight) | Fused Silica | Fused Silica Powder A | 78 | 78 | 78 | 78 | 78 | 78 | 78 | 78 | 78 |
| | | Fused Silica Powder B | 22 | 22 | 22 | 22 | 22 | 22 | 22 | 22 | 22 |
| | Fluoride | Calcium Fluoride | - | 5 | 2 | 1 | 0.5 | - | - | - | - |
| | | Magnesium Fluoride | - | - | - | - | - | 5 | 2 | 1 | 0.5 |
| | Water | | 20 | 20 | 20 | 20 | 20 | 20 | 20 | 20 | 20 |
| Bulk Density (g/cm³) | | | 1.78 | 2.77 | 1.78 | 1.78 | 1.77 | 1.77 | 1.77 | 1.78 | 1.78 |
| Three-Point Bending Strength (MPa) | | | 15.3 | 8.2 | 12.3 | 22.8 | 14.3 | 8.2 | 11.0 | 12.9 | 14.1 |
| Coefficient of Thermal Expansion (°C⁻¹x10⁻⁴) | | | 0.87 | 2.02 | 1.35 | 1.05 | 0.90 | 1.52 | 1.08 | 0.92 | 0.88 |
| Corrosion Test | Corroded Area (cm²) | | 135.4 | 2.4 | 4.3 | 8.7 | 86.5 | 1.2 | 2.8 | 3.6 | 44.2 |
| | Evaluation | | | A | A | A | B | A | A | A | B |
| | | | C | | | | | | | | |
| Formulation (% by weight) | Fused Silica | | 100.0 | 95.2 | 98.0 | 99.0 | 99.5 | 95.2 | 98.0 | 99.0 | 99.5 |
| | Fluoride | | 0.0 | 4.8 | 2.0 | 1.0 | 0.5 | 4.8 | 4.8 | 1.0 | 0.5 |
| | (Fluorine Content) | | (0.0} | (2.3) | (0.9) | (0.5) | (0.2) | (2.9) | (2.9) | (0.6) | (0.3) |

**Table 2**

| | | | Example 9 | Example 10 | Example 11 | Example 12 | Example 13 |
|---|---|---|---|---|---|---|---|
| Formulation (parts by weight) | Fused Silica | Fused Silica Powder A | 78 | 78 | 78 | 78 | 78 |
| | | Fused Silica Powder B | 22 | 22 | 22 | 22 | 22 |
| | Fluoride | Calcium Fluoride | .0.16 | 0.08 | 0.2 | 12 | - |
| | | Magnesium Fluoride | - | - | - | - | 0.2 |
| | Water | | 20 | 20 | 20 | 20 | 20 |
| Bulk Density (g/cm³) | | | 1.77 | 1.77 | 1.77 | 1.78 | 1.78 |
| Three-Point Bending Strength (MPa) | | | 14.9 | 13.8 | 14.5 | 6.2 | 14.1 |
| Coefficient of Thermal Expansion (°C⁻¹x10⁻⁴) | | | 0.90 | 0.90 | 0.90 | 3.2 | 0.84 |
| Corrosion Test | Corroded Area (cm²) | | 91.2 | 101.4 | 88.2 | 1.8 | 46.9 |
| | Evaluation | | B | B | B | A | 8 |
| | | | | | | | |
| Formulation (% by weight) | Fused Silica | | 99.8 | 99.9 | 99.8 | 89.3 | 99.8 |
| | Fluoride | | 0.2 | 0.1 | 0.2 | 10.7 | 0.2 |
| | (Fluorine Content) | | (0.08) | (0.04) | (0.1) | (5.1) | (0.1) |

The respective test specimens are substantially improved in corrosion resistance, compared to Comparative Example 1 in which no fluoride is contained. Further, a decrease in bending strength is also small, and the coefficient of thermal expansion is also suppressed low. The test specimens of Examples 4 and 8 are somewhat poor in corrosion resistance, but they are suitably used in a member requiring high spalling resistance because of their low coefficient of thermal expansion.

While the present invention has been described in detail and with reference to specific embodiments thereof, it will be apparent to one skilled in the art that various changes and modifications can be made therein without departing from the spirit and scope thereof.
This application is based on Japanese patent application No. 2006-100492 filed March 31, 2006, and the contents thereof are herein incorporated by reference.

## Claims

1. A production method of a fused siliceous refractory comprising:
a slurry preparation step of preparing a slurry comprising raw material solid matter containing a fused silica powder and a fluoride powder,
wherein the raw material solid matter contains the fluoride in an amount of 0.01 to 10% by weight in terms of fluorine content and 90 to 99.9% by weight of the fused silica powder,
wherein the fused silica powder comprises a mixture of 50 to 95% by weight of a first fused silica powder having an average particle size of 1 to 10 µm and 10 to 50% by weight of a second fused silica powder having an average particle size of 50 to 500 µm;
a moulding step of obtaining a molded article from the slurry; and
a burning step of burning the molded article at 1050 to 1250° C.

2. The production method of a fused siliceous refractory according to claim 1, wherein the fluoride powder comprises at least one fluoride selected from the group consisting of calcium fluoride (CaF₂), magnesium fluoride (MgF₂) and cryolite (Na₃AlF₆) and has an average particle size of 1 to 10 µm.

3. The production method of a fused siliceous refractory according to any one of claims 1 and 2, wherein the slurry comprises 100 parts by weight of the raw material solid matter and 10 to 40 parts by weight of water.

## Patentansprüche

1. Verfahren zum Herstellen eines feuerfesten Materials aus Quarzglas, das umfasst:
einen Schritt zum Bereiten einer Aufschlämmung, in dem eine Aufschlämmung bereitet wird, die Ausgangsmaterial-Feststoff umfasst, der ein Quarzglas-Pulver und ein Fluorid-Pulver enthält,
wobei der Ausgangsmaterial-Feststoff das Fluorid in einer Menge von 0,01 bis 10 Gew.-% bezüglich des Fluorgehaltes sowie von 90 bis 99.9 Gew.-% des Quarzglas-Pulvers enthält,
und das Quarzglas-Pulver ein Gemisch aus 50 bis 95 Gew.-% eines ersten Quarzglas-Pulvers mit einer durchschnittlichen Teilchengröße von 1 bis 10 µm und aus 10 bis 50 Gew.-% eines zweiten Quarzglas-Pulvers mit einer durchschnittlichen Teilchengröße von 50 bis 500 µm umfasst;
einen Formschritt, in dem aus der Aufschlämmung ein Formartikel gewonnen wird; und
einen Brennschritt, in dem der Formartikel bei 1050 bis 1250°C gebrannt wird.

2. Verfahren zum Herstellen eines feuerfesten Materials aus Quarzglas nach Anspruch 1, wobei das Fluorid-Pulver wenigstens ein Fluorid umfasst, das aus der Gruppe ausgewählt wird, die aus Calciumfluorid (CaF₂), Magnesiumfluorid (MgF₂) und Cryolit (Na₃AlF₆) besteht, und das eine durchschnittliche Teilchengröße von 1 bis 10 µm hat.

3. Verfahren zum Herstellen eines feuerfesten Materials aus Quarzglas nach einem der Ansprüche 1 und 2, wobei die Aufschlämmung 100 Gewichtsteile des Ausgangsmaterial-Feststoffs und 10 bis 40 Gewichtsteile Wasser umfasst.

## Revendications

1. Procédé de production d'un réfractaire siliceux fondu comprenant :
une étape de préparation de bouillie consistant à préparer une bouillie comprenant une matière première solide contenant une poudre de silice fondue et une poudre de fluorure,
la matière première solide contenant le fluorure en une quantité de 0,01 à 10 % en poids en termes de teneur en fluor et 90 à 99,9 % en poids de la poudre de silice fondue,
la poudre de silice fondue comprenant un mélange de 50 à 95 % en poids d'une première poudre de silice fondue ayant une granulométrie moyenne de 1 à 10 µm et de 10 à 50 % en poids d'une deuxième poudre de silice fondue ayant une granulométrie moyenne de 50 à 500 µm ;
une étape de moulage permettant d'obtenir un article moulé à partir de la bouillie ; et
une étape de calcination consistant à calciner l'article moulé à une température de 1050 à 1250°C.

2. Procédé de production d'un réfractaire siliceux fondu selon la revendication 1, dans lequel la poudre de fluorure comprend au moins un fluorure choisi dans l'ensemble constitué par le fluorure de calcium (CaF₂), le fluorure de magnésium (MgF₂) et la cryolite (Na₃AlF₆) et a une granulométrie moyenne de 1 à 10 µm.

3. Procédé de production d'un réfractaire siliceux fondu selon l'une quelconque des revendications 1 et 2, dans lequel la bouillie comprend 100 parties en poids de la matière première solide et 10 à 40 parties en poids d'eau.
